# EUROPEAN PATENT APPLICATION

(11) **EP 2 352 289 A1**
(43) Date of publication of application: **03.08.2011**
(21) Application number: 09825718.1
(22) Date of filing: 17.04.2009
(51) Int. Cl.: H04N 7/14

(54) **METHOD, DEVICE AND SYSTEM FOR CHANNEL SWITCHING**

(30) Priority: 17.11.2008 CN 200810177329
(71) Applicant: Huawei Technologies Co., Ltd., Longgang District, Shenzhen Guangdong 518129 (CN)
(72) Inventor: GUO, Kai, Shenzhen Guangdong 518129 (CN); QIN, Xia, Shenzhen Guangdong 518129 (CN); ZHENG, Hewen, Shenzhen Guangdong 518129 (CN)
(74) Representative: Charles, Glyndwr
(86) International application number: PCT/CN2009/071338
(87) International publication number: WO 2010/054543

(57) **Abstract**

A method, an apparatus and a system for switching channels are disclosed. The method includes: buffering a multicast Internet Protocol (IP) packet of a live channel; receiving a channel switching request sent by a client for switching to the live channel, and pushing the buffered multicast IP packet to the client; and judging whether the pushed multicast IP packet is synchronous to a real-time multicast IP packet of the live channel; and stopping pushing the buffered multicast IP packet to the client and sending the real-time multicast IP packet to the client if the pushed multicast IP packet is synchronous to the real-time multicast IP packet. The embodiments of the present invention involve no modification of the user terminal and improve the universal applicability and extensibility of the channel switching solution.

## Description

This application claims priority to Chinese Patent Application No. 200810177329.X, filed with the Chinese Patent Office on November 17, 2008 and entitled "Method, Apparatus and System for Switching Channels", which is hereby incorporated by reference in its entirety.

### FIELD OF THE INVENTION

The present invention relates to communication technologies, and in particular, to a method, an apparatus, and a system for switching channels.

### BACKGROUND OF THE INVENTION

Internet Protocol Television (IPTV) is a new technology that uses broadband wired network, integrates the Internet, multimedia and communication technology, and provides home users with diverse interactive services such as digital services. With popularization of the technology, the IPTV is recognized worldwide. However, the IPTV incurs great delay when switching a channel, which has been bothering IPTV users and operators.

The delay of switching a channel is caused by: time for quitting the multicast group of the old channel, time for joining the multicast group of a new channel, time for filling the buffer of Set Top Box (STB) with data, and time for waiting for the I frame. The time for waiting for the I frame is a primary factor.

Conventionally, the IPTV uses video and audio compression coding algorithms, and pictures are encoded as image sequences composed of I frames, P frames, and B frames. The I frame is completely coded for the whole picture, and can be decoded and displayed independently. The I frame provide reference to relevant P frames and B frames; the P frame cannot be decoded or displayed independently, namely, a P frame cannot be decoded or displayed until the reference I frame or a previous P frame is received; the B frame cannot be decoded or displayed independently either, namely, a B frame cannot be decoded or displayed until the previous frame (I frame or P frame) serving as reference and the next frame (P frame) serving as reference are received. The P frame and the B frame describe the difference between frames, and provides higher coding efficiency than the I frame.

The quantity of P frames and B frames are much more than the quantity of I frames. When a user switches a channel, the user encounters P frames or B frames in most cases, and has to wait for the I frame in a long time. Consequently, the channel switching is slow, the experience of the user on watching IPTV programs is deteriorated, and the user loyalty is impaired.

Conventionally, a buffer buffers multimedia data streams corresponding to the IPTV channel before the channel is switched. When switching a channel, the terminal initiates a session, requests the I frame or Group of Pictures (GOP) from the buffer, and joins the multicast group corresponding to the destination channel. The GOP includes the I frame. The buffer pushes the I frame or GOP to the terminal in unicast way, and the terminal buffers the received I frame or GOP, and begins to decode and display the received picture sequence. The terminal stops obtaining the I frame or GOP from the buffer when finding that the obtained I frame or GOP is a duplicate of the real-time multicast stream.

In the process of implementing the present invention, the inventor finds at least the following problems in the prior art:
In the process of switching channels, the terminal needs to initiate two different Transmission Control Protocol (TCP)/Internet Protocol (IP) sockets, namely, unicast socket and multicast socket. The unicast socket is configured to obtain the buffered I frames or GOP, and the multicast socket is configured to obtain real-time channel multicast data streams. After receiving the two multimedia data streams, the terminal needs to sort and stitch the two data streams so that the two data streams are displayed in the same display. The sorting, stitching streams, and processing of the two sockets require modification of the terminal. The modification of the terminal increases the complexity and cost of the terminal and restricts the universal employment of the fast channel switching solution.

When switching a channel, the terminal initiates a separate session to the buffer to trigger push of buffered data, namely, initiates a unicast connection separately. If plenty of users switch channels simultaneously, for example, when masses of users switch channels at the advertisement time inserted in the IPTV program, the buffer needs to support tens of thousands of concurrent session connection. However, the number of concurrent connections currently supported by a server is at most 2500. Considering the large number of users of the IPTV system, the network size in the prior art is limited to the number of concurrent connections, and the network is not extensible or competent when plenty of users switch channels simultaneously. Besides, the maintenance system of the buffer is different from that of the network device, which increases the costs of deploying, operating, and maintaining the IPTV system.

### SUMMARY OF THE INVENTION

The embodiments of the present invention provide a method, an apparatus, and a system for switching channels to shorten time of switching channels and simplifying user terminals.

A method for switching channels in an embodiment of the present invention includes:
buffering a multicast IP packet of a live channel;
receiving a channel switching request sent by a client for switching to the live channel, and pushing the buffered multicast IP packet to the client; and
judging whether the pushed multicast IP packet is synchronous to a real-time multicast IP packet of the live channel; and stopping pushing the buffered multicast IP packet to the client and sending the real-time multicast IP packet to the client if the pushed multicast IP packet is synchronous to the real-time multicast IP packet.

An apparatus for switching channels in an embodiment of the present invention includes:
a buffering module, configured to buffer a multicast IP packet of a live channel;
a pushing module, configured to receive a channel switching request sent by a client for switching to the live channel, and push the multicast IP packet buffered by the buffering module to the client;
a judging module, configured to judge whether the multicast IP packet pushed by the pushing module is synchronous to the real-time multicast IP packet of the live channel; and
a sending module, configured to send the real-time multicast IP packet to the client if the judging module determines that the pushed multicast IP packet is synchronous to the real-time multicast IP packet.

A system for switching channels in an embodiment of the present invention includes:
a multicast source, configured to send a multicast IP packet of a live channel to a channel switching apparatus;
a channel switching apparatus, configured to: buffer the multicast IP packet sent by the multicast source, receive a channel switching request sent by a client for switching to the live channel, and push the buffered multicast IP packet to the client; judge whether the pushed multicast IP packet is synchronous to a real-time multicast IP packet of the live channel; and stop pushing the buffered multicast IP packet to the client and send the real-time multicast IP packet to the client if the pushed multicast IP packet is synchronous to the real-time multicast IP packet; and
a client, configured to receive the real-time multicast IP packet of the live channel or the multicast IP packet buffered by the channel switching apparatus.

In the embodiments of the present invention, the device outside the terminal pushes the buffered multicast IP packet to switch the channel, which involves no modification of the user terminal and improves the universal applicability and extensibility of the channel switching solution.

### BRIEF DESCRIPTION OF THE DRAWINGS

To make the technical solution under the present invention or in the prior art clearer, the following outlines the accompanying drawings involved in the description of the embodiments of the present invention or the prior art. Apparently, the accompanying drawings outlined below are illustrative rather than exhaustive, and persons of ordinary skill in the art can derive other drawings from such accompanying drawings without any creative effort.
FIG. 1 is a flowchart of a channel switching method according to an embodiment of the present invention;
FIG. 2 is a flowchart of channel switching according to an embodiment of the present invention;
FIG. 3 shows a structure of a channel switching apparatus according to an embodiment of the present invention;
FIG. 4 shows a structure of a channel switching apparatus according to an embodiment of the present invention; and
FIG. 5 shows a structure of a channel switching system according to an embodiment of the present invention.

### DETAILED DESCRIPTION OF THE EMBODIMENTS

The following detailed description is given in conjunction with the accompanying drawings in order to provide a thorough understanding of the present invention. Evidently, the drawings and the detailed description are merely representative of particular embodiments of the present invention rather than all embodiments. All other embodiments, which can be derived by those skilled in the art from the embodiments given herein without any creative effort, shall fall within the scope of the present invention.

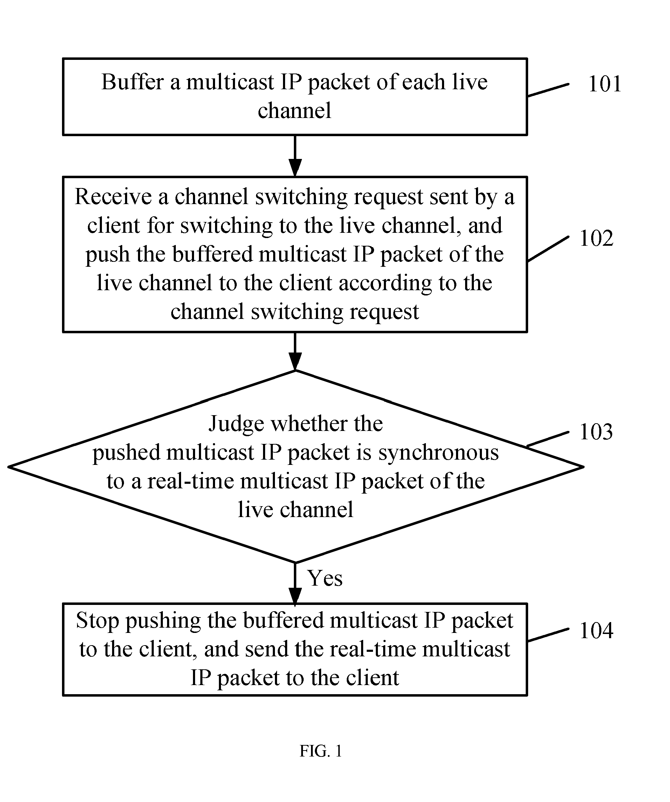

As shown in FIG. 1, a method for switching channels in an embodiment of the present invention includes the following steps:

### Step 101: Buffer a multicast IP packet of each live channel.

At the time of buffering the multicast IP packet of the live channel, the beginning and the end of the GOP and the I frame each may be marked, indicating the beginning of the multicast IP packet that can be decoded by the terminal. Specifically, key information of the video, such as Program Association Table (PAT) ID, Program Map Table (PMT) ID, and a mark of the I frame, may be identified through Deep Packets Inspect (DPI). Alternatively, the video source marks special information in a certain field or bit in the packet header, and the key information of the video is recognized according to the marked special information at the time of buffering the multicast IP packet.

### Step 102: Receive a channel switching request sent by a client for switching to a live channel, and push the buffered multicast IP packet of the live channel to the client according to the channel switching request.

After the channel switching request for switching to the live channel is received from the client, the buffered multicast IP packet of the live channel are pushed to the client according to the order of receiving the buffered multicast IP packet. The first multicast IP packet pushed to the client is a packet that can be independently decoded by the terminal and closest to the real-time multicast IP packet of the destination channel requested by the client. For example, the first multicast IP packet is a GOP start packet, namely, an I frame, or a PAT/PMT packet.

The channel switching request sent by the client triggers the pushing of the buffered multicast IP packet, in which the Internet Group Management Protocol (IGMP) signaling is reused as the request. Before the buffered multicast IP packet arrives at the client, the Media Access Control (MAC) address of the client is retrieved from the channel switching request, the destination MAC address of the multicast IP packet is set to the MAC address of the client, namely, the source MAC carried in the IGMP signaling as the channel switching request, and then the modified multicast IP packet is ready for being pushed to the client. Through the foregoing setting of the MAC address, the buffered multicast IP packet can be sent to the specific client instead of other clients that have joined the channel multicast group.

### Step 103: Judge whether the pushed multicast IP packet is synchronous to a real-time multicast IP packet of the live channel; and proceed to step 104 if the pushed multicast IP packet is synchronous to the real-time multicast IP packet of the live channel.

The step of judging whether the pushed multicast IP packet is synchronous to the real-time multicast IP packet may be: judging whether the pushed multicast IP packet adjoins the received real-time multicast IP packet seamlessly; and determining that the pushed multicast IP packet is synchronous to the real-time multicast IP packet if the pushed multicast IP packet adjoins the received real-time multicast IP packet seamlessly.

### Step 104: Stop pushing the buffered multicast IP packet to the client, and send the real-time multicast IP packet to the client.

A judgement is made about whether the pushed multicast IP packet is synchronous to the real-time multicast IP packet in the process of pushing the buffered multicast IP packet to the client: if the pushed multicast IP packet is synchronous to the real-time multicast IP packet, stop pushing the buffered multicast IP packet, add the client into the multicast group, and send the real-time multicast IP packet to the client; in the process of pushing the buffered multicast IP packet of the requested channel, if the buffered multicast IP is not synchronous to the real-time multicast IP packet, continue pushing the buffered multicast IP packet; when pushing the buffered multicast IP packet, forbid sending the real-time multicast IP packet to the client to avoid coexistence of two data streams.

In this embodiment, the device outside the terminal pushes the buffered multicast IP packet to switch the channel, which involves no modification of the user terminal and improves the universal applicability and extensibility of the channel switching solution.

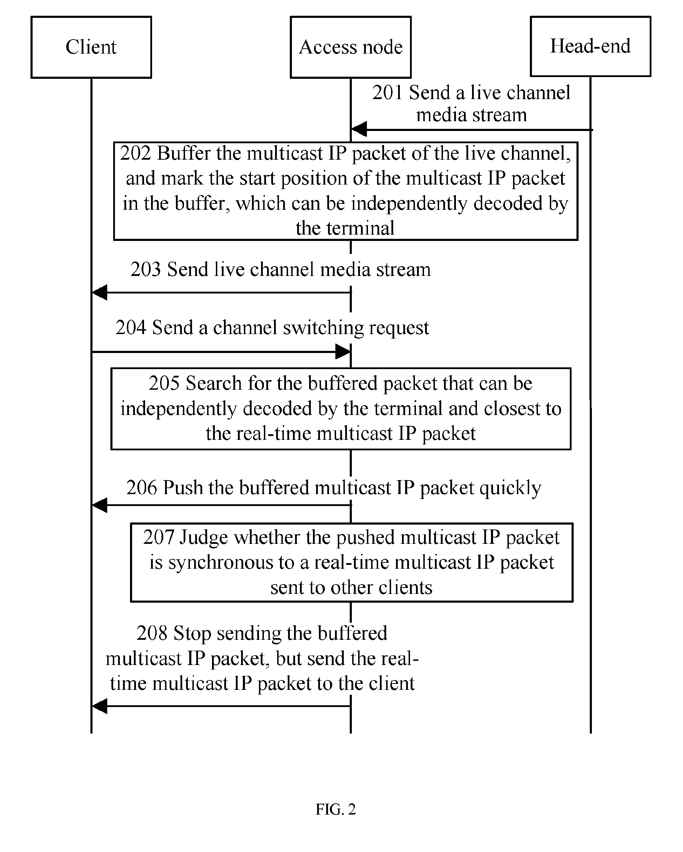

As shown in FIG. 2, a detailed process of switching channels in an embodiment of the present invention includes the following steps:

### Step 201: A head-end sends a live channel media stream to an access node.

The head-end is a source device for sending media stream of a channel, for example, an edge server mounted to a Metropolitan Area Network (MAN) device. The head-end obtains the media stream by recording the media stream at the satellite television, or obtains the media stream forwarded from other wired networks. The access node may be a Digital Subscriber Line Access Multiplexer (DSLAM) device, Optical Line Terminal (OLT) or IP switch deployed by the operator. The head-end and the access node may be connected through a core network, MAN, convergence network, or other networking modes.

The live channel media stream received by the access node from the head-end may pass through other network devices. The live channel media stream may be sent according to static multicast configuration set by the operator. The live channel media stream is always sent to the access node no matter whether any user under the access node is watching a channel. The live channel media stream may also be sent by dynamic joining into the multicast group. When no user among the users served by the access node is watching a channel, the live channel media stream is never sent to the access node, namely, a live channel media stream is sent to the access node when at least one user is watching the channel. The access node joins the multicast group dynamically, which saves the network bandwidth. However, if a user under the access node is switching to a channel, and no user under the access node is watching this channel previously, extra delay will be caused to the channel switching if the access node requests to join the multicast group dynamically.

### Step 202: The access node buffers the multicast IP packet of the live channel, and marks the start position of the multicast IP packet in the buffer, which can be independently decoded by the terminal.

The buffered multicast IP packet and the multicast IP packet sent to the user terminal in the common multicast mode come from the same source, and therefore, have the same format. In the buffering process, the Real-time Transport Protocol (RTP) packet or Transport Stream (TS) packet that may bear video content in the multicast IP packets remains unmodified.

### Step 203: The access node sends the live channel media stream to the client.

The client is the terminal through which the user watches the IPTV program and sends the channel switching request. The user may operate a remote controller or other software to trigger the sending of the channel switching request of the client. A device capable of routing such as home gateway may exist on the route from the client to the access node, and the client and the access node may be connected through a Digital Subscriber Line (DSL), Passive Optical Network (PON), Ethernet, and so on.

After receiving the live channel media stream from the head-end, the access node may send the live channel media stream to the client directly without delay, or send the live channel media stream after a delay. If the access node sends the live channel media stream after a delay, the multicast IP packet buffered by the access node may overtake the media stream broadcast live on the real-time channel on time dimension, which avoids the time gap of switching from pushing the buffered multicast IP packet to sending the common channel multicast group packet.

### Step 204: The client sends a channel switching request to the access node.

When the user wants to switch the channel, the client sends a channel switching request to the access node. In an application scenario that uses the multicast technology to play programs on a live channel, the channel switching request generally includes a Leave command and a Join command in the IGMP signaling.

### Step 205: The access node searches for the buffered packet that can be independently decoded by the terminal and closest to the real-time multicast IP packet.

After receiving the channel switching request from the client, the access node searches for the packet that can be independently decoded by the terminal and closest to the real-time multicast IP packet. Depending on the video coding technology, the content of the live channel may be Moving Pictures Experts Group (MPEG) 2 codes or H.264 codes. The content of the live channel may be encapsulated in the MPEG2 TS format or Network Abstraction Layer (NAL) format. The closest packet that can be independently decoded by the terminal in this embodiment may be defined differently for different coding technologies and different encapsulation formats. For example, for the video encapsulated in the MPEG2 TS format, the packet which can be independently decoded by the terminal may be defined as GOP start packet.

### Step 206: The access node pushes the buffered multicast IP packet to the client.

After searching out closest packet that can be independently decoded by the terminal, the access node pushes the buffered multicast IP packet to the client by using the unicast MAC as destination MAC address. Although the IP packet is a multicast packet, the destination MAC is a unicast MAC address, and the access node sends the buffered multicast IP packet to only the client that requests to switch the channel instead of all clients that have joined the multicast group. The format of the IP packet retrieved by the client from the buffered multicast IP packet pushed by the access node is the same as the format of the IP packet retrieved from the common multicast group packet stream. Therefore, the client does not need to modify the processing mechanism additionally.

### Step 207: The access node judges whether the pushed buffered multicast IP packet is synchronous to the real-time multicast IP packet sent to other clients; and proceeds to step 208 if the pushed multicast IP packet is synchronous to the real-time multicast IP packet sent to other clients; or proceeds to step 206 if the pushed multicast IP packet is not synchronous to the real-time multicast IP packet sent to other clients.

### Step 208: The access node stops sending the buffered multicast IP packet, but sends the real-time multicast IP packet to the client.

When pushing the buffered multicast IP packet to the client, the access node judges whether the pushed multicast IP packet is synchronous to the real-time multicast IP packet. Because the real-time multicast IP packet sent to the client has a delay, the pushed multicast IP packet can be synchronous to the real-time multicast IP packet. If the access node sends the real-time multicast IP packet without delay, when the access node finishes pushing the buffered multicast IP packet, the pushed multicast IP packet is regarded as synchronous to the real-time multicast IP packet, and then the access node sends the real-time multicast IP packet to the client. If a few packets are lost during the switching from the buffered multicast IP packet to the real-time multicast IP packet, in order to make up for the lost packets, the client may request retransmission of the lost packets, or the access node continues pushing the buffered multicast IP packet at a low rate for a while. In the process of making up for the lost packets, the client may receive two multimedia data streams. Because this process continues for only a short time, the pushed buffered multicast IP packet occupies little space, and the push rate is low, the bandwidth between the client and the access node is not affected.

If the pushed multicast IP packet is synchronous to the real-time multicast IP packet, the access node stops pushing the buffered multicast IP packet to the client, but sends the real-time multicast IP packet to the client instead. Afterward, the client obtains the real-time multicast packet of the channel through multicast, and enters a common multicast process. If the pushed multicast IP packet is not synchronous to the real-time multicast IP packet, the access node goes on pushing the buffered multicast IP packet to the client.

It should be emphasized that the access node in the embodiments of the present invention shall not be construed as any limitation on the technical solution under the present invention. The device for implementing the function of switching channels is not limited to the access node, and may be the device located elsewhere in the network, for example, a Broadband Remote Access Server (BRAS). The BRAS sends the code streams on a channel to every user who watches the channel, and implements the method of switching channels described herein in place of the access node. When the operator deploys the IPTV network, if the network serves only a moderate number of users at the beginning, the BRAS may provide copying of the live channel packets directly to implement channel switching.

In this embodiment, the buffered multicast IP packet is pushed as a means of switching the channel, which involves no modification of the user terminal and is not limited to the number of concurrent connections, reduces the costs of deploying and operating the IPTV system, improves the universal applicability and extensibility of the channel switching solution, and shortens the delay of switching channels.

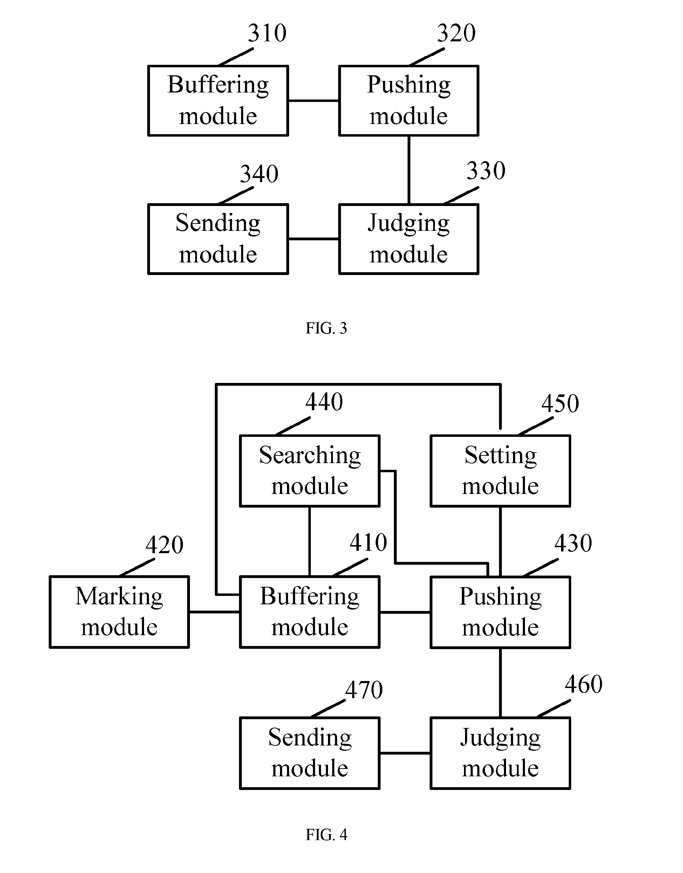

As shown in FIG. 3, an apparatus for switching channels in an embodiment of the present invention includes the following modules 310, 320, 330, and 340:

The buffering module 310 is configured to buffer a multicast IP packet of each live channel.

Specifically, the buffering module 310 is configured to receive code streams on all live channels, and sets a buffer space for each live channel to buffer the multicast IP packets of the live channel. The packets on each live channel may have only one copy buffered. The buffer space of each live channel is independent. Therefore, at the time of providing the fast channel switching service for a user, the start point of reading the buffered multicast IP packet differs, which does not affect the reading of the buffered multicast IP packet at the time of providing the fast channel switching service for other users.

The pushing module 320 is configured to receive a channel switching request sent by the client for switching to the live channel, and push the multicast IP packet buffered by the buffering module 310 to the client.

Specifically, the pushing module 320 is configured to receive the channel switching request sent by the client for switching to a channel, and push the buffered multicast IP packets of this channel to the client according to the order of receiving the buffered multicast IP packets. The first multicast IP packet pushed to the client is a packet which can be independently decoded by the terminal and closest to the real-time multicast IP packet of the destination channel requested by the client. For example, the first multicast IP packet is a GOP start packet, namely, I frame, or a PAT/PMT packet.

The channel switching request sent by the client triggers pushing of the buffered multicast IP packet, and reuses the IGMP signaling. Before the buffered multicast IP packet arrives at the client, the MAC address of the client is retrieved from the channel switching request, the destination MAC address of the multicast IP packet is set to the MAC address of the client, namely, the source MAC address carried in the IGMP signaling in the channel switching request. Through the operation of setting the MAC address, the multicast IP packet can be sent to the specific client instead of other clients that have joined the channel multicast group.

The judging module 330 is configured to judge whether the multicast IP packet pushed by the pushing module 320 is synchronous to the real-time multicast IP packet sent to other clients.

The sending module 340 is configured to send the real-time multicast IP packet to the client which requests to switch the channel if the judging module 330 determines that the pushed multicast IP packet is synchronous to the real-time multicast IP packet sent to other clients.

While the pushing module 320 pushes the buffered multicast IP packet to the client which requests to switch the channel, the judging module 330 may judge whether the buffered multicast IP packet is synchronous to the real-time multicast IP packet. If the buffered multicast IP packet is synchronous to the real-time multicast IP packet, the pushing module 320 stops pushing the buffered multicast IP packet, and the sending module 340 sends the real-time multicast IP packet to the client; in the process of pushing the buffered multicast IP packet of the destination channel, if the buffered multicast IP is not synchronous to the real-time multicast IP packet, the pushing module 320 continues pushing the buffered multicast IP packet; in the process of pushing the buffered multicast IP packet, the sending module 340 is forbidden to send the real-time multicast IP packet to the client to avoid coexistence of two data streams.

In this embodiment, the channel is switched by way of pushing the buffered multicast IP packet, which involves no modification of the user terminal and improves the universal applicability and extensibility of the channel switching solution.

As shown in FIG. 4, an apparatus for switching channels in an embodiment of the present invention includes the following modules 410, 420, 430, 440, 450, 460, and 470:

A buffering module 410 is configured to buffer a multicast IP packet of each live channel.

Specifically, the buffering module 410 is configured to receive code streams on all channels, and sets a buffer space for each channel to buffer the multicast IP packets of the television channel. The packets on each channel may have only one copy buffered. The buffer space of each channel is independent. Therefore, at the time of providing the fast channel switching service for a user, the start point of reading the buffered multicast IP packet differs, which does not affect the reading of the buffered multicast IP packet at the time of providing the fast channel switching service for other users.

A marking module 420 is configured to mark the start position of the multicast IP packet in the buffer, which is buffered by the buffering module 410 and can be independently decoded by the terminal.

Specifically, key information of the video may be identified through DPI such as PAT ID, PMT ID, and I frame ID; or the video source adds a special information ID into certain fields or bits in the packet header, and the marking module 420 identifies the key information of the video according to the special information ID at the time of buffering the multicast IP packet.

A pushing module 430 is configured to receive a channel switching request sent by the client for switching to the live channel, and push the multicast IP packet buffered by the buffering module 410 to the client.

Specifically, the pushing module 430 is configured to receive the channel switching request sent by the client for switching to a channel, and push the buffered multicast IP packets of this channel to the client according to the order of receiving the buffered multicast IP packets. The first multicast IP packet pushed to the client is a packet which can be independently decoded by the terminal and closest to the real-time multicast IP packet of the destination channel requested by the client. For example, the first multicast IP packet is a GOP start packet, namely, I frame, or a PAT/PMT packet.

A searching module 440 is configured to search for the packet that can be independently decodaed by the terminal and closest to the real-time multicast IP packet among the multicast IP packets buffered by the buffering module 410.

After the pushing module 430 receives the channel switching request sent by the client, the searching module 440 searches for the packet that can be independently decoded by the terminal and closest to the real-time multicast IP packet among the buffered multicast IP packets. The pushing module 430 pushes the packet that can be independently decoded by the terminal to the client as the first pushed multicast IP packet.

The setting module 450 is configured to retrieve the MAC address of the client from the channel switching request, and set the destination MAC address of the buffered multicast IP packet to the MAC address of the client which requests to switch the channel.

The channel switching request sent by the client triggers pushing of the buffered multicast IP packet, and reuses the IGMP signaling. Before the pushing module 430 pushes the buffered multicast IP packet to the client, the setting module 450 sets the destination MAC address of the buffered multicast IP packet to the source MAC address carried in the IGMP signaling in the channel switching request, namely, to the MAC address of the client. Through the foregoing setting of the MAC address, the multicast IP packet can be sent to the specific client instead of other clients that have joined the channel multicast group.

A judging module 460 is configured to judge whether the multicast IP packet pushed by the pushing module 430 is synchronous to the real-time multicast IP packet.

A sending module 470 is configured to send the real-time multicast IP packet to the client if the judging module 460 determines that the pushed multicast IP packet is synchronous to the real-time multicast IP packet.

While the pushing module 430 pushes the buffered multicast IP packet to the client, the judging module 460 may judge whether the buffered multicast IP packet is synchronous to the real-time multicast IP packet. If the buffered multicast IP packet is synchronous to the real-time multicast IP packet, the pushing module 430 stops pushing the buffered multicast IP packet, and the sending module 470 sends the real-time multicast IP packet to the client; in the process of pushing the buffered multicast IP packet of the destination channel, if the buffered multicast IP is not synchronous to the real-time multicast IP packet, the pushing module 430 continues pushing the buffered multicast IP packet; in the process of pushing the buffered multicast IP packet, the sending module 470 is forbidden to send the real-time multicast IP packet to the client to avoid coexistence of two data streams.

In this embodiment, the buffered multicast IP packet is pushed as a means of switching the channel, which involves no modification of the user terminal and is not limited to the number of concurrent connections, reduces the costs of deploying and operating the IPTV system, and improves the universal applicability and extensibility of the channel switching solution. Moreover, the packet that can be independently decoded by the terminal and closest to the real-time multicast IP packet is pushed first, which shortens the switching delay.

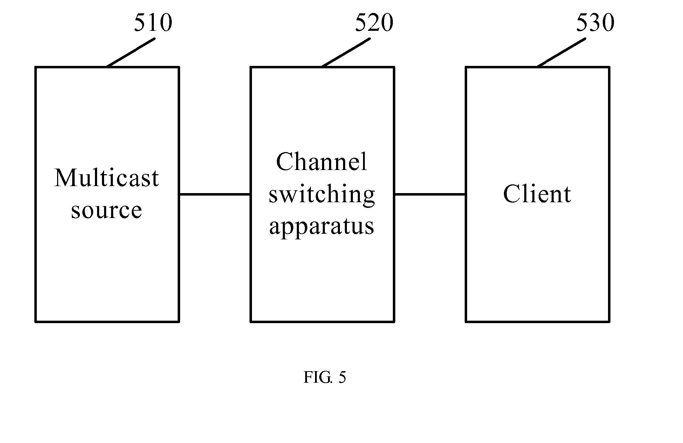

As shown in FIG. 5, a system for switching channels is provided in an embodiment of the present invention. The components of the system are described below:

A multicast source 510 is configured to send a multicast IP packet of a live channel to a channel switching apparatus 520.

The multicast source 510 is a source device that sends channel media streams, for example, an edge server mounted to a MAN device. The multicast source 510 obtains the media stream by recording the media stream at the satellite television, or by forwarding the media stream from other wired networks. The channel switching apparatus 520 includes a DSLAM, OLT, and IP switch deployed by the operator. The multicast source 510 and a channel switching apparatus 520 may be connected through a core network, MAN, convergence network, or other networking modes.

The channel switching apparatus 520 is configured to: buffer the multicast IP packet sent by the multicast source 510, receive a channel switching request sent by a client 530 for switching to the live channel, and push the buffered multicast IP packet to the client 530; judge whether the pushed multicast IP packet is synchronous to a real-time multicast IP packet of the live channel; and stop pushing the buffered multicast IP packet to the client 530 and send the real-time multicast IP packet to the client 530 if the pushed multicast IP packet is synchronous to the real-time multicast IP packet.

The channel switching apparatus 520 receives code streams on all live channels, and sets a buffer space for each live channel to buffer the multicast IP packets of the live channel. The packets on each live channel may have only one copy buffered. After receiving the channel switching request sent by the client 530 for switching the current channel to a destination channel, the channel switching apparatus 520 pushes the buffered multicast IP packets of the destination channel to the client 530 according to the order of receiving the buffered multicast IP packets. While the channel switching apparatus 520 pushes the buffered multicast IP packet to the client 530, the channel switching apparatus 520 may judge whether the buffered multicast IP packet is synchronous to the real-time multicast IP packet. If the buffered multicast IP packet is synchronous to the real-time multicast IP packet, the channel switching apparatus 520 stops pushing the buffered multicast IP packet, but sends the real-time multicast IP packet to the client 530 instead.

The channel switching apparatus 520 is further configured to mark the start position of the multicast IP packet in the buffer, which can be independently decoded by the terminal.

Specifically, key information of the video may be identified through DPI such as PAT ID, PMT ID, and I frame ID; or the video source adds a special information ID into certain fields or bits in the packet header, and the channel switching apparatus 520 identifies the key information of the video according to the special information ID at the time of buffering the multicast IP packet.

The channel switching apparatus 520 is further configured to search for the multicast IP packet that can be independently decoded by the terminal and closest to the real-time multicast IP packet of the live channel among the buffered multicast IP packets.

After receiving the channel switching request sent by the client 530, the channel switching apparatus 520 searches for the packet that can be independently decoded by the terminal and closest to the real-time multicast IP packet among the buffered multicast IP packets, and pushes the packet that can be independently decoded by the terminal to the client 530 as the first pushed multicast IP packet.

The channel switching apparatus 520 is further configured to retrieve the MAC address of the client 530 from the channel switching request, and set the destination MAC address of the buffered multicast IP packet to the MAC address of the client 530.

The channel switching request sent by the client triggers pushing of the buffered multicast IP packet, and reuses the IGMP signaling. Before the channel switching apparatus 520 pushes the buffered multicast IP packet to the client, the destination MAC address of the buffered multicast IP packet is set to the source MAC address carried in the IGMP signaling in the channel switching request, namely, to the MAC address of the client 530. Through the foregoing setting of the MAC address, the multicast IP packet can be sent to the specific client instead of other clients that have joined the channel multicast group.

The client 530 is configured to receive the real-time multicast IP packet of the live channel or the multicast IP packet buffered by the channel switching apparatus 520.

The client 530 is the terminal through which the user watches the IPTV program and sends the channel switching request. The user may operate a remote controller or other software to trigger the sending of the channel switching request from the client 530. A device capable of routing such as home gateway may exist on the route from the client 530 to the channel switching apparatus 520, and the client and the access node may be connected through a DSL, PON, Ethernet, and so on.

In this embodiment, the channel is switched by way of pushing the buffered multicast IP packet, which involves no modification of the user terminal and improves the universal applicability and extensibility of the channel switching solution.

After reading the foregoing embodiments, those skilled in the art are clearly aware that the present invention may be implemented through hardware or through software in addition to a necessary universal hardware platform. The essence or novelty of the technical solution under the present invention may be embodied as a software product. The software product is buffered in storage media and incorporates several instructions that enable a terminal (such as mobile phone, personal computer, server, or network device) to execute the methods specified in any embodiment of the present invention.

Finally, it should be noted that the above embodiments are merely provided for describing the technical solutions of the present invention, but not intended to limit the present invention. It is apparent that persons skilled in the art can make various modifications and variations to the invention without departing from the spirit and scope of the invention. The present invention is intended to cover the modifications and variations provided that they fall in the scope of protection defined by the following claims or their equivalents.

## Claims

1. A method for switching channels, comprising:
buffering a multicast Internet Protocol (IP) packet of a live channel;
receiving a channel switching request sent by a client for switching to the live channel, and pushing the buffered multicast IP packet to the client; and
judging whether the pushed multicast IP packet is synchronous to a real-time multicast IP packet of the live channel; and stopping pushing the buffered multicast IP packet to the client and sending the real-time multicast IP packet to the client if the pushed multicast IP packet is synchronous to the real-time multicast IP packet.

2. The method according to claim 1, wherein: after buffering the multicast IP packet of the live channel, the method further comprises:
marking a start position of a multicast IP packet that can be independently decoded by a terminal in a buffer.

3. The method according to claim 2, wherein:
a first buffered multicast IP packet pushed to the client is the multicast IP packet that can be independently decoded by the terminal and closest to the real-time multicast IP packet of the live channel among all buffered multicast IP packets.

4. The method according to claim 3, wherein:
after receiving a channel switching request sent by a client for switching to the live channel, the method further comprises:
searching for the multicast IP packet that can be independently decoded by the terminal and closest to the real-time multicast IP packet of the live channel.

5. The method according to claim 1, wherein:
before pushing the buffered multicast IP packet to the client, the method further comprises:
retrieving a Media Access Control (MAC) address of the client from the channel switching request, and setting a destination MAC address of the buffered multicast IP packet to the MAC address of the client.

6. An apparatus for switching channels, comprising:
a buffering module, configured to buffer a multicast Internet Protocol (IP) packet of a live channel;
a pushing module, configured to receive a channel switching request sent by a client for switching to the live channel, and push the multicast IP packet buffered by the buffering module to the client;
a judging module, configured to judge whether the multicast IP packet pushed by the pushing module is synchronous to a real-time multicast IP packet of the live channel; and
a sending module, configured to send the real-time multicast IP packet to the client if the judging module determines that the pushed multicast IP packet is synchronous to the real-time multicast IP packet.

7. The apparatus according to claim 6, further comprising:
a marking module, configured to mark the multicast IP packet buffered by the buffering module, namely, mark a start position of the multicast IP packet in the buffer, which can be independently decoded by a terminal.

8. The apparatus according to claim 7, further comprising:
a searching module, configured to search for a multicast IP packet that can be independently decoded by the terminal and closest to the real-time multicast IP packet of the live channel among all multicast IP packets buffered by the buffering module.

9. The apparatus according to claim 6, further comprising:
a setting module, configured to retrieve a Media Access Control (MAC) address of the client from the channel switching request, and set a destination MAC address of the buffered multicast IP packet to the MAC address of the client.

10. A system for switching channels, comprising:
a multicast source, configured to send a multicast Internet Protocol (IP) packet of a live channel to a channel switching apparatus;
the channel switching apparatus, configured to: buffer the multicast IP packet sent by the multicast source, receive a channel switching request sent by a client for switching to the live channel, and push the buffered multicast IP packet to the client; judge whether the pushed multicast IP packet is synchronous to a real-time multicast IP packet of the live channel; and stop pushing the buffered multicast IP packet to the client and send the real-time multicast IP packet to the client if the pushed multicast IP packet is synchronous to the real-time multicast IP packet; and
the client, configured to receive the real-time multicast IP packet of the live channel or the multicast IP packet buffered by the channel switching apparatus.

11. The system according to claim 10, wherein:
the channel switching apparatus is further configured to mark the buffered multicast IP packet, namely, mark a start position of the multicast IP packet in the buffer, which can be independently decoded by a terminal.

12. The system according to claim 10, wherein:
the channel switching apparatus is further configured to search for the multicast IP packet that can be independently decoded by a terminal and closest to the real-time multicast IP packet of the live channel among all buffered multicast IP packets.

13. The system according to claim 10, wherein:
the channel switching apparatus is further configured to retrieve a Media Access Control (MAC) address of the client from the channel switching request, and set a destination MAC address of the buffered multicast IP packet to the MAC address of the client.
